(19) Europäisches Patentamt European Patent Office Office européen des brevets

(11) **EP 4 760 220 A1**

(12) **EUROPEAN PATENT APPLICATION**

(43) Date of publication:
**17.06.2026 Bulletin 2026/25**

(21) Application number: **24218683.1**

(22) Date of filing: **10.12.2024**

(51) International Patent Classification (IPC):
**G01J 1/02** *(2006.01)* **G01J 1/08** *(2006.01)*
**G01J 1/32** *(2006.01)* **G01J 1/04** *(2006.01)*

(52) Cooperative Patent Classification (CPC):
**G01J 1/08; G01J 1/0295; G01J 1/32;** G01J 1/0228;
G01J 1/0418; G01J 2001/083; G01J 2001/086

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Airbus Defence and Space GmbH 82024 Taufkirchen (DE)**

(72) Inventors:
• **Haiml, Markus**
  **82024 Taufkirchen (DE)**
• **Böddeker, André**
  **82024 Taufkirchen (DE)**
• **Kritzler, Michael**
  **82024 Taufkirchen (DE)**

(74) Representative: **Isarpatent**
  **Patent- und Rechtsanwälte**
  **Barth Hassa Peckmann & Partner mbB**
  **Friedrichstraße 31**
  **80801 München (DE)**

(54) **METHOD AND CALIBRATION DEVICE FOR CALIBRATING A DETECTOR DEVICE UNDER TEST**

(57) The present invention provides a method for calibrating a detector device (2) under test, comprising a) emitting a number of n first laser pulses (P2-P4) by a first set (S1) of corresponding n laser sources (3a-d) of a plurality of laser sources (3a-d) in a first time slot (t1) and a number of m second laser pulses (P1) by a second set (S2) of m laser sources (3a-d) of the plurality of laser sources (3a-d) in a second time slot (t2) different from the first time slot (t1), wherein n ≥ 1, m ≥ 1, and n + m ≥ 3, wherein a ratio of n and m is defined as a predetermined pulse ratio n/m, wherein the first laser pulses (P2-P4) and the second laser pulses (P1) have a predetermined pulse energy; b) combining the first set (S1) of n laser pulses and the second set (S2) of m laser pulses to obtain a first combined laser pulse (PC1) in the first time slot (t1) and a second combined laser pulse (PC2) in the second time slot (t2); c) directing the first and second combined laser pulses (PC1, PC2) onto a detector (21) of the detector device (2); d) detecting the first combined laser pulse (PC1) in the first time slot (t1) and the second combined laser pulse (PC2) in the second time slot (t2) by the detector device (2) to provide corresponding first and second electric signals (61, 62); e) repeating steps a) to d) by regrouping the plurality of laser sources (3a-d) into a different first set (S1) of n laser sources (3a-d) and a different second set (S2) of m laser sources (3a-d) through all permutations (A-D) of the plurality of laser sources (3a-d) by keeping the predetermined pulse ratio n/m; and f) averaging each of the detected first and second electric signals (62) of all permutations (A-D) to obtain an averaged first electric signal (61') and an averaged second electric signal (62') indicative of the response of the detector device (2) for the predetermined pulse ratio n/m. Further, the present invention provides a corresponding calibration device for calibrating a detector device (2) under test.

Fig. 2

EP 4 760 220 A1

**Description**

TECHNICAL FIELD OF THE INVENTION

The invention relates to a method for calibrating a detector device under test as well as a calibration device for calibrating a detector device under test. In particular, the invention relates to a linearity calibration of an optical detector device under test.

TECHNICAL BACKGROUND

Linearity calibration with high accuracy, such as in the order of $10^{-4}$ of the measured signal, belongs to the most challenging optical calibration tasks. Measuring the electrical response of a detection chain as a function of continuous optical power level or of optical pulse energy are so-called linearity tests. When the responsivity, which is the scale between optical input power and electrical output power, is not constant but changes with increasing input power or input energy level, the system is non-linear. Linearity tests versus variable input level require (among other factors) highly stable and well calibrated reference detectors. Commonly, reference detectors with the required precision of $10^{-4}$ are typically not readily available.

Theocharous et al. "Absolute linearity measurements on HgCdTe detectors in the infrared region" Appl. Optics, vol. 43, no. 21, p. 4182-4188 (20.07.2004) describe a linearity measurement on HgCdTe detectors in the infrared region using a double aperture method.

Therefore, the present invention is directed to improving a calibration of an optical detector device.

SUMMARY OF THE INVENTION

According to the invention, this problem is solved in each case by the subject matters of the independent claims.

According to a first aspect of the invention, a method for calibrating a detector device under test is provided. The method comprises a) emitting a number of n first laser pulses by a first set of corresponding n laser sources of a plurality of laser sources in a first time slot and a number of m second laser pulses by a second set of m laser sources of the plurality of laser sources in a second time slot different from the first time slot, wherein $n \geq 1$, $m \geq 1$, and $n + m \geq 3$, wherein a ratio of n and m is defined as a predetermined pulse ratio n/m, wherein the first laser pulses and the second laser pulses have a predetermined pulse energy; b) combining the first set of n laser pulses and the second set of m laser pulses to obtain a first combined laser pulse in the first time slot and a second combined laser pulse in the second time slot; c) directing the first and second combined laser pulses onto a detector of the detector device under test; d) detecting the first combined laser pulse in the first time slot and the second combined laser pulse in the second time slot by the detector device to provide corresponding first and second electric signals; e) repeating steps a) to d) by regrouping the plurality of laser sources into a different first set of n laser sources and a different second set of m laser sources through all permutations of the plurality of laser sources by keeping the predetermined pulse ratio n/m; and f) averaging each of the detected first and second electric signals of all permutations to obtain an averaged first electric signal and an averaged second electric signal indicative of the response of the detector device for the predetermined pulse ratio n/m.

According to a second aspect of the invention, a calibration device for calibrating a detector device under test is provided. The calibration device comprises a plurality of laser sources configured to emit a laser pulse in a predetermined time slot; a combiner arranged downstream the laser sources and upstream the detector device under test and configured to combine the laser pulses to form a combined laser pulse for illuminating a detector of the detector device; and a controller configured to control a first set of n laser sources of the plurality of laser sources to emit respective n first laser pulses in a first time slot and a second set of m laser sources of the plurality of laser sources to emit respective m second laser pulses in a second time slot different from the first time slot, wherein $n \geq 1$, $m \geq 1$, and $n + m \geq 3$, wherein a ratio of n and m is defined as a predetermined pulse ratio n/m; wherein the controller is configured to permute the first set of n laser sources and second set of m laser sources by keeping the predetermined pulse ratio n/m and permute a first set of m laser sources and a second set of n laser sources by keeping an inverse of the predetermined pulse ratio m/n, and wherein the controller is further configured to receive electric signals from the detector device and average first and second electric signals received in response to emitted first and second combined laser pulses to obtain an averaged first electric signal and an averaged second electric signal.

A fundamental concept of the present invention is to generate a pulse train of two pulses with a predetermined energy ratio by super positioning through combining a number of individual lasers, which are generally uncalibrated. Each individual laser source generates one laser pulse of about the same predetermined energy and a same pulse duration every recording time window. The core idea of the invention is to generate a series of different pulse combinations (frames) that are averaged by the number of possible permutations. As a result, the integrated energy of the created pulses has an exact predetermined energy ratio, which can be used to illuminate the detector device under test.

As an example of 3:1 as predetermined ratio, the calibration device generates a pulse train of two pulses with an energy ratio of about 3:1 by superposition of four individual laser sources. Each laser fires one identical pulse per recording window. The pulses of four laser sources are combined to a 3:1 pulse train by triggering the arrival time of each laser pulse. This is performed to obtain a series of four different pulse combinations (frames) so that each laser source is emitting a in a second time window and the others in the first time window. After averaging the four time-recordings (frames), the integrated energy in the first window is $3*(E1 +E2+E3+E4)/4$ and in the second window $1*(E1 +E2+E3+E4)/4$. Although there may be small pulse energy differences, such as +/- 10%, more preferably +/-2%, by the laser sources, this makes sure that the energy ratio is always 3:1 within a small tolerance.

The advantage with respect to the prior art reference above is, for example, that no calibrated equipment, such as calibrated laser sources, is required to perform an exact non-linearity measurement. Furthermore, several integer or fractional predetermined pulse ratios can be generated accurately, such as e.g. 1:1, 2:1, 3:1, 4;1, 3:2, 5:2, 4:3. Further, the calibration device of the present invention does not include nor require moving or turning parts. Moreover, optical parameters such as a beam spot, beam quality, divergence, direction, and others, stay constant for different energy levels and predetermined ratios. As will be discussed further below, the method and calibration device enable internal sanity checks, in which possible cross-talk can be determined and verified. In sum, the calibration device and related method reliably provides illumination with constant energy ratios over large time periods from which a detector device under test can be calibrated to respond with high linearity.

A set of laser sources is to be understood as a selected portion of the sum of all laser sources that emit first or second laser pulses in the corresponding time slot. Since the controller is able to control each laser source individually, the set can be flexibly selected by the controller. Such a set may consist of only one laser source, n+m, e.g. all, laser sources, or a number between these two. The first and second set of selected n+m laser sources typically involve all laser sources available in the calibration device. However, the calibration device may comprise one or more spare laser sources to substitute a defective laser source.

Advantageous embodiments and improvements of the present invention are found in the subordinate claims.

According to some aspects according to the invention, the method further comprises:

g) repeating steps a) to d) by regrouping the plurality of laser sources into a first set of m laser sources emitting m first laser pulses and a second set of n laser sources emitting n second laser sources through all permutations of the plurality of laser sources by keeping an inverse of the predetermined pulse ratio m/n. In these aspects, detecting the first combined laser pulse in the first time slot and the second combined laser pulse in the second time slot by the detector device provides corresponding third and fourth electric signals. Furthermore, averaging includes averaging each of the detected third and fourth electric signals to obtain an averaged third electric signal and an averaged fourth electric signal indicative of the response of the detector device for the predetermined pulse ratio m/n. By applying the inverse predetermined ratio to the device under test, a comparison of the response of the corresponding electrical signals can be performed so that the accuracy of the calibration process is further improved.

According to some aspects according to the invention, by repeating the steps a) to d), for each selected first set of laser sources and second set of laser sources, emitting the m first and n second laser pulses of the inverse of the predetermined pulse ratio m/n subsequently to the emitting of the corresponding n first and m second laser pulses of the predetermined pulse ratio. In this way, a drift in pulse energy of the laser sources can be detected and compensated quickly so that the accuracy of the calibration is ensured.

According to some aspects according to the invention, the method further comprises directing the first and second combined laser pulses through a tunable attenuator before incident onto the detector for attenuating the first and second laser pulses by a predetermined attenuation value. By the attenuator, the detector device under test can be calibrated over a wider range of power levels. For that, steps a) to f) are repeated with different attenuation values within a predetermined time period, which is in particular less than 1 min, for rejecting 1/f-noise from the device under test. This rapid repetition of the measurement steps reduces drifts in the noise structure of the detector device under test.

According to some aspects according to the invention, the method further comprises emitting each of the plurality of laser pulses of the plurality of laser sources in a third time slot different from the first and second time slot, wherein the detector device provides an offset electric signal by reading the detector over the first and second time slots for providing an electrical and optical video offset level. By emitting the laser pulses in the third time slot, no laser pulse is present in the first and second time slots so that mainly the electrical video offset level, potentially detector dark current and unintentional residual or on-purpose provided, continuous background signal is measured, which can be used as an offset video level.

According to some aspects according to the invention, the offset electric signal is provided subsequent to an electric signal of each of a selected first set of n laser sources and second set of m laser pulses of the predetermined pulse ratio and a selected first set of m laser sources and second set of n laser pulses the inverse predetermined pulse ratio. In this way, low frequency noise of the calibration device, as well as low frequency noise and fixed pattern noise of the detector device are measured right after the measured laser pulses, thus ensuring an accurate measurement.

According to some aspects according to the invention, the method further comprises generating an electric pulse signal by a function generator, feeding the electric pulse signal to the first set of laser sources in the first time slot and the second set of laser sources in the second time slot. The function generator can be an arbitrary wave generator or any other suitable function generator, which can generate suitable pulses for feeding the laser sources. One function generator can be used to feed all laser sources with the same electric pulse, or multiple function generator may be used, preferably each feeding one laser source. By a function generator, precise control of the pulse shape and other parameters such as time delay may be achieved.

According to some aspects according to the invention, the method further comprises h) repeating steps a) to f) for a series of different pulse energies, i) extrapolating a signal ratio of a first signal strength of the averaged first electric signal and a second signal strength of the averaged second electric signal indicative to a pulse energy of zero for comparison with the predetermined pulse ratio. By the deviation from the exact value of the predetermined ratio at a pulse energy of zero, the achievable precision can be reliably determined. In these aspects, a second controller controlling the attenuator may be configured to change the selected attenuation value after a predetermined time period, which depends on the selected attenuation value. By selecting more cycles for laser pulses of lower pulse energy, corresponding averaged electric signals provide about the same precision as fewer cycles for laser pulses of higher pulse energies. By this, a balanced precision over the dynamic range may be achieved. Further, a required total measurement time may be minimized..

According to some aspects according to the invention, the method further comprises determining a ratio of a first signal ratio with a second signal ratio to be 1 within a predefined tolerance indicative for a measurement accuracy. The first signal ratio is defined by the ratio of the signal strengths of the averaged first electric signal and the averaged second electric signal, and the second signal ratio is defined by the ratio of the signal strengths of the averaged fourth electric signal and the averaged third electric signal. Deviation from a value of 1 may be a measure of insufficient settling, i.e. memory effects in a photodiode or electronic circuitry, from the front pulse to the second pulse. Therefore, time separation between the first and second time slot may be adapted. A suitable time separation may be around 10 $\mu$s to 1 ms, e.g. 300 $\mu$s.

According to some aspects according to the invention, the method further comprises determining a ratio of a third signal ratio with a fourth signal ratio to be 1 within a predefined tolerance indicative for a measurement accuracy. The third signal ratio is defined by the ratio of the signal strengths of the averaged first electric signal and the averaged third electric signal. The fourth signal ratio is defined by the ratio of the signal strengths of the averaged fourth electric signal and the averaged second electric signal. Deviation from a value of 1 here may be a measure of insufficient settling or other memory effects between recorded frames. A suitable time separation may have to be addressed, such as e.g. between 1.25 ms to 50 ms, preferably depending on the adjustable frame rate. Furthermore, an onset of frame-to-frame cross-talk can be assessed by increasing the frame rate to a frequency where the split between the third signal ratio and the fourth signal ratio starts to deviate.

According to some aspects according to the invention, the method further comprises determining a ratio of a fifth signal ratio and a sixth signal ratio to be 1 within a predefined tolerance indicative for a measurement accuracy. The fifth signal ratio is defined by the ratio of the signal strengths of the averaged first electric signal and the averaged fourth electric signal. The sixth signal ratio is defined by the ratio of the signal strengths of the averaged second electric signal and the averaged third electric signal. A deviation of the determined ratio of the fifth signal ratio and the sixth signal ratio from 1 is a measure for remaining systematic errors.

According to some aspects according to the invention, the calibration device further comprises an tunable attenuator disposed between the combiner and the detector device under test, and a second controller configured to set the tunable attenuator to a selected attenuation value. The second controller preferably is synchronized in time with the controller and configured to change the selected attenuation value within a fraction of a repetition rate of the emitted laser pulses. An attenuator enables calibrating the detector device over a wide pulse energy range. The second controller being independent of the (first) controller ensures no cross talk and high accuracy of the control of the attenuator.

According to some aspects according to the invention, the controller is configured to receive electric signals from the detector device under test in response to detected laser pulses of different pulse energies. The second controller is configured to change the selected attenuation value after a predetermined time period, which depends on the selected attenuation value. Since a calibration measurement for a lower pulse energy may require more frames or single measurements than for higher pulse energy, this embodiment improves the accuracy of the obtained data for a given total recording time. Alternatively, the required total recording time for a target accuracy of the obtained data is minimized.

According to some aspects according to the invention, the plurality of laser sources is coupled to a corresponding number of fibers, wherein the combiner is configured as a fiber coupler. Fiber optics have a number of advantages over free space optics such as robustness, intrinsic high beam quality of the laser pulses, etc.. In this way, the reliability and versatility of the calibration device is increased.

According to some aspects according to the invention, an emission frequency band of the laser sources is different in pairs by at least a predetermined frequency. In this way, the combining of the laser pulses can be performed spectrally, so that phases do not have to be adapted. This enables a stable combined pulse thereby reducing instabilities due to interference effects.

According to some aspects according to the invention, a difference of the emission frequency band of each laser source is at least 1 MHz, preferably between 1 MHz and 100 GHz. These represent suitable separation bands for optical pulses.

According to some aspects according to the invention, an optical path between each laser source of the plurality of laser sources and the combiner is the same within a predetermined optical path tolerance. This ensures simultaneous combining of the laser pulses, thus providing a clean combined laser pulse.

According to some aspects according to the invention, the device further comprises a function generator configured to generate a pulsed electric signal, wherein the device is configured to feed the laser sources by the generated pulsed electric signal. As mentioned above, the function generator can be an arbitrary wave generator or any other suitable function generator, which can generate suitable pulses for feeding the laser sources. One function generator can be used to feed all laser sources with the same electric pulse, or multiple function generators may be used, preferably each feeding one laser source. By a function generator, control of the pulse shape and other parameters such as time delay may be achieved.

According to some aspects according to the invention, an electric path between the function generator and each of the laser sources is the same within a predetermined electric path tolerance. This ensures accurate simultaneous emission of the laser pulses, thus providing a clean combined laser pulse.

According to some aspects according to the invention, the calibration device further comprises a background light source emitting a background light light beam and a second combiner configured to combine the background light beam with the combined laser pulse for illuminating the detector of the detector device with the resulting twice combined light beams. The background light source may be configured as as a fiber-coupled laser, SLED or an LED, and simulate sun illuminated objects, stray light, instrument background light. The background light source thus may set an operating point for the calibration measurement, to which the laser pulses are additively modulated. This improves the calibration quality in particular for a detector device under test, whose non-linearity is not only of a first order, having a variably adjustable operating point.

According to some aspects according to the invention, the calibration device is configured to calibrate the detector device under test for linearity without any recalibration of any component of the calibration device. This ensured long operation time and less off-time with high accuracy calibration without an operator is needed.

The above embodiments and further developments can be combined with each other as desired, if useful. In particular, all features of the method for calibrating a detector device under test are transferable to the calibration device for calibrating a detector device under test, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

Advantageous embodiments and further developments emerge from the description with reference to the figures.

BRIEF SUMMARY OF THE DRAWINGS

The present invention is explained more specifically below on the basis of the exemplary embodiments indicated in the schematic figures, in which:

Fig. 1    shows a flow chart for a method for calibrating a detector device under test according to an embodiment of the invention;

Fig. 2    shows a schematic illustration of a calibration device according to an embodiment of the invention;

Fig. 3    shows a schematic illustration of a first and second laser pulses and combined laser pulses applied in an embodiment of the method for calibrating a detector device under test according to an embodiment of the invention;

Fig. 4    shows a flow chart for a method for calibrating a detector device under test according to a further embodiment of the invention;

Fig. 5    shows a schematic illustration of a calibration device according to a further embodiment of the invention;

Fig. 6    shows a pulse stream of a first, second and offset laser pulses applied in an embodiment of the method for calibrating a detector device under test according to an embodiment of the invention; and

Fig. 7    shows a schematic illustration of sanity checks of the calibration device as applied in an embodiment of the method for calibrating a detector device under test according to an embodiment of the invention.

In the figures of the drawing, elements, features and components which are identical, functionally identical and of identical action are denoted in each case by the same reference designations unless stated otherwise.

DESCRIPTION OF EXEMPLARY EMBODIMENTS

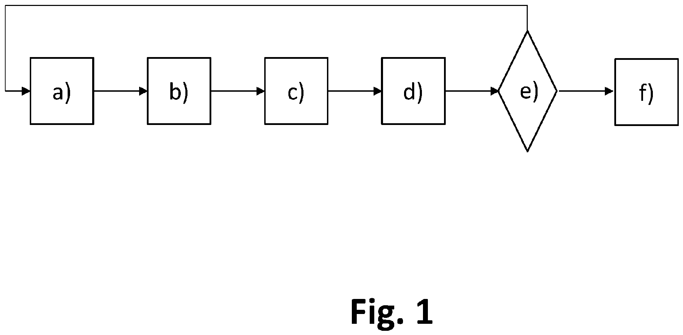

Fig. 1 shows a flow chart for a method for calibrating a detector device under test according to an embodiment of the invention.

The method for calibrating a detector device 2 under test comprises a first step a), in which a number of n first laser pulses P2-P4 are emitted by a first set S1 of corresponding n laser sources 3a-d of a plurality of laser sources 3a-d in a first time slot t1. In this first step a), a number of m second laser pulses P1 are emitted by a second set S2 of m laser sources 3a-d of the plurality of laser sources 3a-d in a second time slot t2 different from the first time slot t1. The conditions for n and m are $n \geq 1$, $m \geq 1$, and $n + m \geq 3$. A ratio of n and m is defined as a predetermined pulse ratio n/m.

In a second step b), the first set S1 of n laser pulses and the second set S2 of m laser pulses are combined to obtain a first combined laser pulse PC1 in the first time slot t1 and a second combined laser pulse PC2 in the second time slot t2. Since the first laser pulses P2-P4 and the second laser pulses P1 have a predetermined pulse energy within certain tolerances, e.g. +/-10%, more preferred +/-2%, the predetermined pulse ratio n/m corresponds to a respective predetermined pulse energy ratio of the combined laser pulses PC1 and PC2, which is similar to n/m.

In a third step c), the first and second combined laser pulses PC1, PC2 are directed onto a detector 21 of the detector device 2 under test. The detector 21 may be a photodetector or another type of optical detector with typically non-linear response.

In a fourth step d), the first combined laser pulse PC1 in the first time slot t1 and the second combined laser pulse PC2 in the second time slot t2 are detected by the detector device 2 to provide corresponding first and second electric signals 61, 62. As will be described further below, the detector device 2 preferably comprises a processing part 22, which generates the first and second electric signals 61, 62 using standard electrical circuitry.

Steps a) to d) are then repeated by regrouping the plurality of laser sources 3a-d into a different first set S1 of n laser sources 3a-d and a different second set S2 of m laser sources 3a-d through all permutations A-D of the plurality of laser sources 3a-d by keeping the predetermined pulse ratio n/m.

As a further step f) each of the detected first and second electric signals 61, 62 of all permutations A-D are averaged to obtain an averaged first electric signal 61' and an averaged second electric signal 62' indicative of the response of the detector device 2 for the predetermined pulse ratio n/m. The ratio of these averaged electric signals 61' and 62' provides the response of the detector device 2 under test. Since the pulse ratio n/m is known and very precise, the detector device 2 under test now can be calibrated using standard methods, such as e.g. look-up tables, according to the achieved response in the form of the averaged first and second electric signals 61' and 62'.

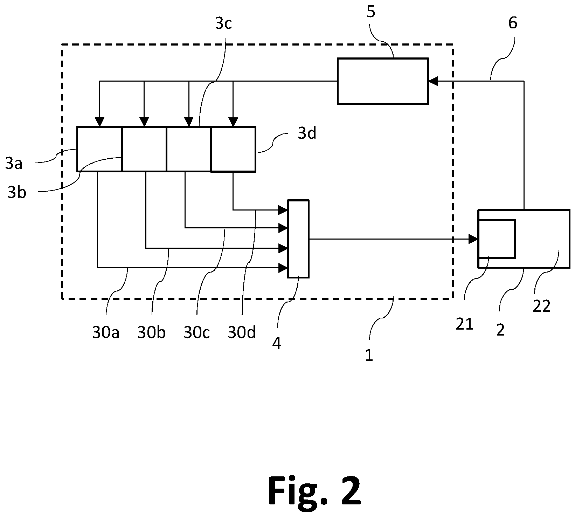

Fig. 2 shows a schematic illustration of a calibration device 1 according to an embodiment of the invention.

The calibration device 1 for calibrating a detector device 2 under test comprises a plurality of laser sources 3a-d configured to emit a laser pulse P1-P4 in a predetermined time slot. The laser sources 3a-d can be a SLED, a LED or any lasers suitable for this task. For a compact setup, laser diodes as laser sources are preferred. More specifically, laser diodes having a rather small bandwidth and high stability are used for better performance. Further, in some embodiments, the laser sources 3a-d are configured as fiber-coupled LEDs or SLEDs. In such embodiments, combining the pulses of such laser sources does not show interference so that a spectral separation of these fiber coupled SLEDs or LEDS is not required. In preferred embodiments, the laser sources 3a-d are configured as temperature-stabilized DFB lasers. For these laser sources 3a-d, a pulse length of 30ns were modulated particularly reliably and their wavelength and pulse energy remain particularly stable.

The calibration device 1 further comprises a combiner 4 arranged downstream the laser sources 3a-d and upstream the detector device 2 under test and configured to combine the laser pulses P1-P4 to form a combined laser pulse PC1, PC2 for illuminating a detector 21 of the detector device 2 under test.

Furthermore, the calibration device 1 comprises a controller 5 configured to control a first set S1 of n laser sources 3a-d of the plurality of laser sources 3a-d to emit respective n first laser pulses P2-P4 in a first time slot t1 and a second set S2 of m laser sources 3a-d of the plurality of laser sources 3a-d to emit respective m second laser pulses P1 in a second time slot t2 different from the first time slot t1. General conditions for n and m are as follows: $n \geq 1$, $m \geq 1$, and $n + m \geq 3$, wherein a ratio of n and m is defined as a predetermined pulse ratio n/m. In the embodiment shown in Fig. 2, the number of laser source 3a-d are exemplary chosen to be 4. With the shown calibration device 1, a predetermined ratio n/m may be selected to 3:1, so that n=3 and m=1. Thus, a first set S1 of three laser sources chosen from the four laser sources 3a-d and a second set S2 of one laser source may be the remaining laser source out of the four laser sources 3a-d.

The controller 5 is configured to permute the first set S1 of n laser sources 3a-d and second set S2 of m laser sources 3a-d by keeping the predetermined pulse ratio n/m and permute a first set S1 of m laser sources 3a-d and a second set S2 of n laser sources 3a-d by keeping an inverse of the predetermined pulse ratio m/n.

The controller 5 is further configured to receive electric signals 6 from the detector device 2 under test and average first and second electric signals 61, 62 received in response to emitted first and second combined laser pulses PC1, PC2 to obtain an averaged first electric signal 61' and an averaged second electric signal 62'. In this embodiment, the detector device 2 under test comprises a processing part 22, which generates the first and second electric signals 61, 62 using standard electrical circuitry and send these to the controller 5.

Another obvious cause for a systematic error is interference. As we are mixing light from different but coherent light sources operating at a similar wavelength, one would suspect their beams must create interference patterns. Through an analysis, the minimum separation between the wavelengths was determined by a fast oscilloscope with fiber coupled input and by a fiber coupled optical spectrum analyzer. The objective is to detune the laser wavelength to shift the heterodyne interference frequency to a few GHz, well above the signal chain's electrical cut-off frequency. Thus, in preferred embodiments, a frequency band of the laser sources 3a-d differs in pairs by a predetermined frequency to avoid instabilities due to coherent interference. In some embodiments, each laser source 3a-d has a difference of at least 1 MHz in the emission frequency band, preferably between 1 MHz and 100 GHz for optimal separation bands of the laser pulses. This enables a stable combined pulse, thereby reducing instabilities due to interference effects of the combined laser pulses PC1, PC2 by laser pulses P1-P4. The wavelength of each laser source 3a-d may be tuned to fulfil this requirement by adjusting their operating temperature.

In preferred embodiments of the calibration device 1, the optical path 30a-c between each laser source 3a-d of the plurality of laser sources 3a-d and the combiner 4 is the same within a predetermined optical path tolerance. This ensures that simultaneously emitted laser pulses P1-P4 combine to combined laser pulses PC1, PC2 without significant changes in the pulse shape.

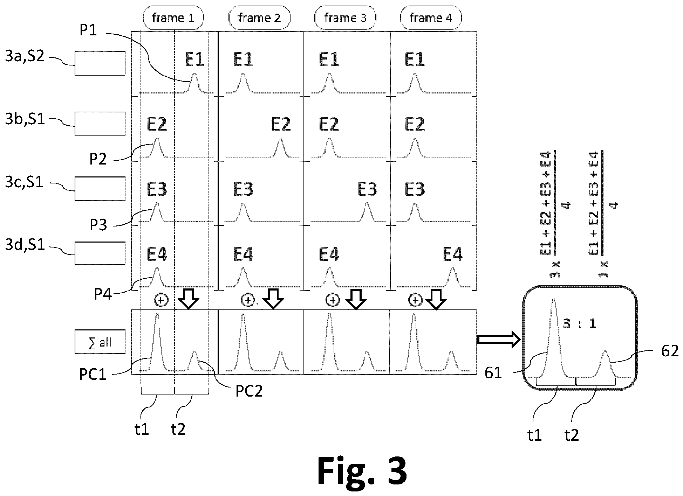

Fig. 3 shows a schematic illustration of a first and second laser pulses P1-P4 and combined laser pulses PC1, PC2 applied in an embodiment of the method for calibrating a detector device 2 under test according to a further embodiment of the invention.

Fig. 3 depicts the essential steps of the method for calibrating a detector device 2 under test.

In a first step a), a number of n first laser pulses P2-P4 are emitted by a first set S1 of corresponding n laser sources 3a-d of a plurality of laser sources 3a-d in a first time slot t1 and a number of m second laser pulses P1 are emitted by a second set S2 of m laser sources 3a-d of the plurality of laser sources 3a-d in a second time slot t2 different from the first time slot t1, wherein $n \geq 1$, $m \geq 1$, and $n + m \geq 3$, wherein a ratio of n and m is defined as a predetermined pulse ratio n/m, wherein the first laser pulses P2-P4 and the second laser pulses P1 have a predetermined pulse energy.

As in the embodiment of the calibration device 1 described above with reference to Fig. 2, the number of laser sources 3a-d is selected to be four. Therefore, a predetermined ratio of 3:1 can be realized by a first set S1 of three laser sources 3b-d emitting their laser pulses P2-P4 in the first time slot t1 and a second set S2 of laser source 3a emitting its laser pulse P1 in the second time slot t2. Thus, n=3 and m= 1 in this example.

In a further step b), the first set S1 of n laser pulses and the second set S2 of m laser pulses are combined to obtain a first combined laser pulse PC1 in the first time slot t1 and a second combined laser pulse PC2 in the second time slot t2. More specifically, laser pulses P2, P3 and P4 are combined having a laser pulse energy of E2+E3+E4 in the first time slot t1. Laser pulse P1 having laser pulse E1 is remaining in time slot t2. Since laser pulse energies E1, E2, E3, E4 are equal within a certain tolerance, preferably within 10%, more preferably within 2%, the combined laser pulses PC1, PC2 have a predetermined ratio of about 3:1 already.

In a further step c), the first and second combined laser pulses PC1, PC2 are directed onto a detector 21 of the detector device 2 under test. In a further step d), the first combined laser pulse PC1 in the first time slot t1 and the second combined laser pulse PC2 in the second time slot t2 are detected by the detector device 2 under test to provide corresponding first and second electric signals 61, 62.

In a further step e), steps a) to d) are repeated by regrouping the plurality of laser sources 3a-d into a different first set S1 of n laser sources 3a-d and a different second set S2 of m laser sources 3a-d through all permutations A-D of the plurality of laser sources 3a-d by keeping the predetermined pulse ratio n/m. Thus, for each permutation, another of the four laser sources 3a-3b is forming the second set S2 of laser sources. For example, in permutation A, laser source 3a forms the second set S2, as indicated in Fig. 3, in permutation B, the second laser source 3b, in permutation C the third laser source 3c and in permutation D the fourth laser source 3d. In each permutation A to D, the three other laser sources form the first set S1 of laser sources, i.e. laser sources 3b-d in permutation A, laser sources 3a, 3c-d in permutation B, laser sources 3a-b, 3c in permutation C and laser sources 3a-c in permutation D.

In a further step f), each of the detected first and second electric signals 62 of all permutations A-D are averaged to obtain an averaged first electric signal 61 and an averaged second electric signal 62 indicative of the response of the detector device 2 under test for the predetermined pulse ratio n/m. By the permutations, the tolerances of the pulse energies E1 to E4 averages out so that the detected laser pulse energies are

$$3 \times \frac{E1 + E2 + E3 + E4}{4} : 1 \times \frac{E1 + E2 + E3 + E4}{4}$$

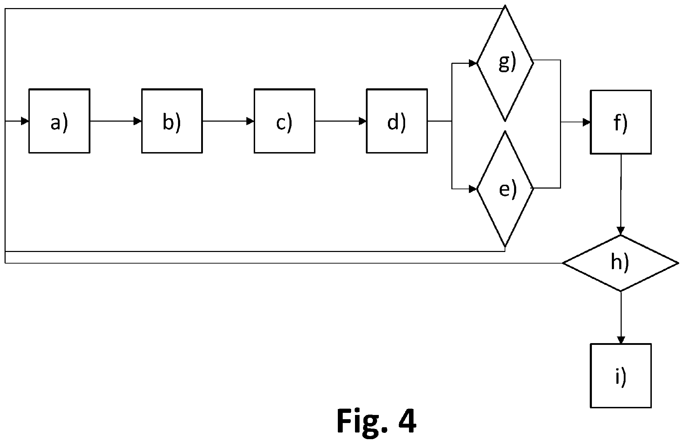

Fig. 4 shows a flow chart for a method for calibrating a detector device under test according to a further embodiment of the invention.

The embodiment of the method for calibrating a detector device 2 under test shown in Fig. 4 is based on the embodiment shown in Fig. 1. However, in a further step g), the steps a) to d) are repeated by regrouping the plurality of laser sources 3a-d into a first set S1 of m laser sources 3a-d, emitting m first laser pulses P2-P4 and a second set S2 of n laser sources 3a-d emitting n second laser sources through all permutations A-D of the plurality of laser sources 3a-d by keeping an inverse of the predetermined pulse ratio m/n.

In some embodiments, in step d), the first combined laser pulse PC1 in the first time slot t1 and the second combined laser pulse PC2 in the second time slot t2 detected by the detector device 2 under test provide corresponding third and fourth electric signals 64. In step f), the averaging includes averaging each of the detected third and fourth electric signals 64 to obtain an averaged third electric signal 63 and an averaged fourth electric signal 64 indicative of the response of the detector device 2 under test for the predetermined pulse ratio m/n. By applying the inverse predetermined ratio to the detector device 2 under test, a comparison of the linearity in the first to fourth electrical signals 61-64 can be performed so that the accuracy and reliability of the calibration is further improved and can be monitored and assessed.

In some embodiments, the steps a to d are repeated for each selected first set S1 of laser sources 3a-d and second set S2 of laser sources 3a-d, emitting the m first and n second laser pulses P1 of the inverse of the predetermined pulse ratio m/n subsequently to the emitting of the corresponding n first and m second laser pulses P1 of the predetermined pulse ratio. 'Thus, each laser source 3a-d keeps the same temperature in time slot t1 and time slot t2 avoiding systematic drifts of pulse energy and wavelength between time slot t2 compared to time slot t1 and so the accuracy of the calibration is ensured.

In certain embodiments, in a further step h), steps a) to f) are repeated for a series of different pulse energies. Then, in a further step i), a signal ratio of a first signal strength of the averaged first electric signal 61 and a second signal strength of the averaged second electric signal 62 is extrapolated to a pulse energy of zero for comparison with the predetermined pulse ratio. For this, an attenuator 7 is used in some embodiments as will be described further below, or the laser sources 3a-d may be gain modulated for different pulse energies.

In this embodiment, the first and second combined laser pulses PC1, PC2 are directed through an optical tunable attenuator 7 before incident onto the detector 21 for attenuating the first and second laser pulses P1 by a predetermined attenuation value, preferentially repeating steps a to f within a predetermined time period, which is in particular less than 1min, for rejecting 1/f-noise from the device under test. In some embodiments, the attenuator 7 is configured as a fiber attenuator. In some embodiments, the attenuator 7 comprises a first attenuator for cyclic light level variation and a second fiber attenuator for static adjustment of dynamic range. In these embodiments, a second controller 51 controlling an attenuator 7 is configured to change the selected attenuation value after a predetermined time period, which depends on the selected attenuation value. A cycle for illuminating may be, for example, consists of a total of 373 frames, which results of 131, 88, 62, 42, 30, 20 for six different energy levels of the laser pulses P1-P4 from weakest to strongest. This is because for a calibration measurement, reliable averaging of a lower pulse energy may require more frames or single measurements than for higher pulse energy. This embodiment thus improves the accuracy of the obtained data.

In some embodiments, each of the plurality of laser pulses of the plurality of laser sources 3a-d is emitted in a third time slot t3 different from the first and second time slots t1, t2. The detector device 2 provides an offset electric signal 65 by reading the detector 21 over the first and second time slots t1, t2 for providing an electrical and optical video offset level.

The offset electric signal 65 is provided following the electric signal 6 of each of a selected first set S1 of n laser sources 3a-d and second set S2 of m laser pulses of the predetermined pulse ratio, and a selected first set S1 of n laser sources 3a-d and second set S2 of m laser pulses the inverse predetermined pulse ratio. Thus, the offset can be determined right away after the detection of the combined laser pulses PC1, and PC2 according to the predetermined and inverse of the predetermined ratio, thereby ensuring a high accuracy.

An electric pulse signal is generated by function generators 8a, 8b. The electric pulse signal is being fed to the first set S1 of laser sources 3a-d in the first time slot t1 and the second set S2 of laser sources 3a-d in the second time slot through electric paths 80a-d. In a preferred embodiment, two function generators 8a, 8b are used to generate respective electric pulse signals. A first and second electric path 80a, 80b connect the first function generator 8a with the first and second laser sources 3a, 3b, and a third and fourth electric path 80c, 80d connect the second function generator 8b with the third and fourth laser sources 3a, 3b.

Furthermore, in a preferred embodiment, sanity checks may be conducted that checks the general functionality of the calibration device 1. In a first of such embodiments, a ratio between a first signal ratio 71 and a second signal ratio 72 is determined to be 1 within a specified tolerance indicative of a measurement accuracy. The first signal ratio 71 is defined as the ratio of the signal strengths of the first signal and the second signal. The second signal ratio 72 is determined by the ratio of the signal strengths of the averaged fourth signal and the averaged third signal. Deviation from 1 may be a measure of insufficient settling, i.e. memory effects in a detector 21, such as a photodiode or electronic circuitry, from the front pulse to the second pulse. Therefore, time separation between the first and second time slot may be adapted. A suitable time separation may be around 10 $\mu$s to 1 ms, e.g. 300 $\mu$s.

Furthermore, in a preferred embodiment, a ratio of a third signal ratio 73 with a fourth signal ratio 74 is determined to be 1 within a predefined tolerance indicative of a measurement accuracy. The third signal ratio 73 is defined by the ratio of the signal strengths of the first and third signals. The fourth signal ratio 74 is determined by the ratio between the signal strengths of the averaged fourth signal and the averaged second signal. Deviation from 1 here may be a measure for insufficient settling or other memory effects between recorded frames. A suitable time separation may have to be addressed, such as e.g. between 1.25 ms to 50 ms, preferably depending on the adjustable frame rate. Furthermore, an onset of frame-to-frame cross-talk can be assessed by increasing the frame rate to a frequency where the split between the third signal ratio and the fourth signal ratio starts to deviate.

Furthermore, in a preferred embodiment, a fifth signal ratio 75 and a sixth signal ratio 76 should be within a predefined tolerance indicative of a measurement accuracy. The fifth signal ratio 75 is defined by the ratio of the signal strengths of the averaged first electric signal 61' and the averaged fourth electric signal 64', wherein the fifth signal ratio 75 is defined by the ratio of the signal strengths of the averaged first electric signal 61' and the averaged fourth electric signal 64'. The sixth signal ratio 76 is defined by the ratio of the signal strengths of the averaged second electric signal 62' and the averaged third electric signal 63', wherein the sixth signal ratio is defined by the ratio of the signal strengths of the averaged second electric signal 62' and the averaged third electric signal 63'. A deviation of the determined ratio of the fifth signal ratio and the sixth signal ratio from 1 is a measure for remaining systematic errors.

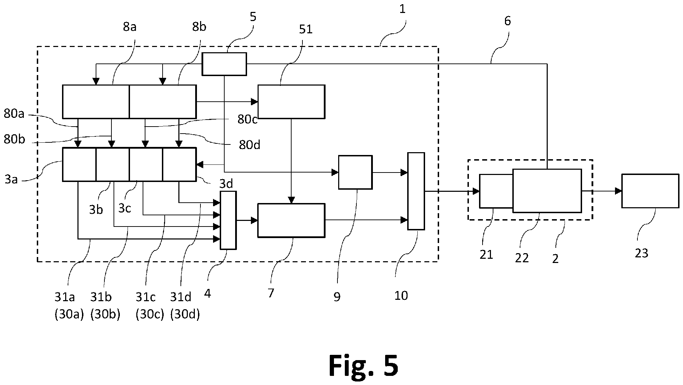

Fig. 5 shows a schematic illustration of a calibration device according to a further embodiment of the invention.

The calibration device 1 shown in Fig. 5 is based on the calibration device 1 as described in Fig. 1. Here as well, four laser sources 3a-d are applied to generate first and second laser pulses (P1-P4) in the first and second time slot (t1,t2) and to generate pulses having a predetermined pulse ratio of 3:1. In further embodiments, a different number laser sources 3a-d may be used to produce different predetermined ratios of, e.g., 2:1, 4;1, 3:2, 5:2, 4:3 etc.

The calibration device 1 comprises an tunable attenuator 7 disposed between the combiner 4 and the detector device 2 under test, and a second controller 51 configured to set the tunable attenuator 7 to a selected attenuation value, wherein the second controller 51. In this embodiment, the second controller 51 is synchronized in time with the controller 5 and configured to change the selected attenuation value within a fraction of a repetition rate of the emitted laser pulses.

Furthermore, the plurality of laser sources 3a-d is coupled to a corresponding number of optical fibers 31a-d. The combiner 4 is configured as a fiber coupler. Furthermore, the tunable attenuator 7 is configured as a fiber attenuator.

The calibration device 1 further comprises a function generator 8a, 8b configured to generate a pulsed electric signal. The calibration device 1 is configured to feed the laser sources 3a-d by the generated pulsed electric signal.

In Fig. 5, it can be seen that an electric path 80a-d between the function generator 8a, 8b and each of the laser sources 3a-d is the same within a predetermined electric path tolerance. Furthermore, the optical paths 30a-d are ensured to be the same within a similar optical path tolerance. The optical paths 30a-d are realized in this embodiment by optical fibers, which are preferably single mode optical fibers 31a-d.

The calibration device 1 of the present embodiment further comprises a background light source 9 emitting a background light beam and a second combiner 10 configured to combine the background light beam with the combined laser pulse PC1, PC2 for illuminating the detector 21 of the detector device 2 under test. The background light source 9 may simulate sun illuminated objects, stray light, and instrument background light. The background light source 9 thus sets an operating point for the calibration measurement, to which the laser pulses are additively modulated.

The controller 5 in this embodiment comprises all function of the controller 5 shown and described with reference to the embodiment of Fig. 1. However, the controller 5 is further configured to receive electric signals 6 from the detector device 2 under test in response to detected laser pulses of different pulse energies. The controller 5 is thus connected to the function generators 8a, 8b, the laser sources 3a-d and the background light source 9. In some embodiments, a connection from the controller 5 to the second controller 51 is present as well.

To achieve clean pulses of light, the laser sources 3a-d, in particular laser diodes, idle at an electric driving current well below the threshold, at which these would start emitting a stable laser beam. This idle current is chosen so low to minimize any unwanted background radiation. Any background radiation introduced at this step would have to be treated by the downstream optics exactly like the laser pulses P1-P4. A background or offset level would also be cyclic modulated, and hence the offset level does not stay constant. This would potentially result in a systematic error of the measured pulse energy ratio.

The laser pulses P1-P4 are then emitted towards the detector device 2 under test, where these are incident on the detector 21 of the detector device 2 under test. An electric processing part 22 generates a corresponding electric signal 61-64, which are sent back to the controller 5 (not shown in Fig. 5). The electric signals 61-64 processing in the processing part 22 are stored in a data storage 23.

In some embodiments, the four laser sources 3a-d are gain modulated, e.g. by an RF-voltage input, which may be used to emit at one or more selected predetermined pulse energies in the selected time slot t1-t3.

For a further calibration, the processing follows a series of steps which may begin with a raw analog-to-digital converter, ADC values resolved in time for every recording window and ends with the ratio between the estimated energies of the combined and the single pulses, preferably for different pulse energy levels or attenuation levels.

If necessary, the non-linearity of the ADC might be corrected by a look-up-table (LUT) of the range of possible ADC integer values. The LUT approach is fast and could be implemented already in the signal chain FPGA, for instance.

Further, the recorded windows may be sorted into the different attenuation values. For this purpose, a level detection algorithm detects the beginning of the highest level. From there, the windows can simply be sorted by their index because the number of windows per level is known.

Furthermore, for each recording window, an algorithm subtracts the empty frame, i.e. the offset signal 65, from the consecutive 3:1 frame trace and 1:3 frame trace, sample by sample, still completely time resolved. This eliminates triggered artifacts like clock feed through or supply voltage modulations, which are synchronized to the data acquisition but not part of an optical signals.

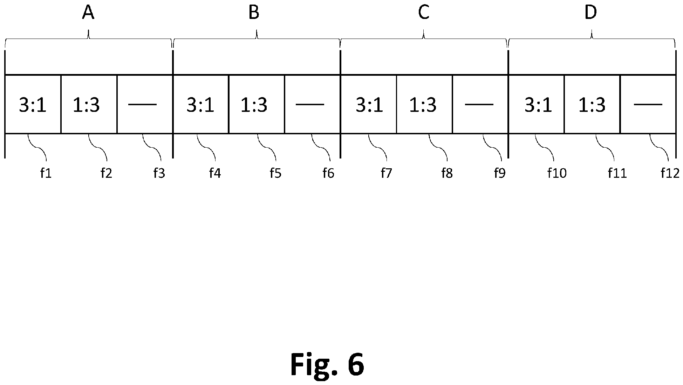

To reduce the noise component, a number of 12-frame blocks may be acquired and then averaged to achieve the desired sensitivity, as will be described further below with reference to Fig. 6 as an example. During the development of the test equipment, calculating the median of each sample has proven to be the best compromise between resilience against outliers and computational effort. For signals with significant noise level, it is beneficial to average the high and the low pulse energy before calculating the ratio. Otherwise, a systematic deviation for lower pulse energies may be introduced.

To estimate the energy ratio between the pulses, an algorithm estimates a value for the energy of each laser pulse P1-P4. Due to the short duration of each pulse and the resulting under-sampling of the pulse shape, simply taking the maximum sample value does not yield a usable estimation. Among several methods including boxcar averages, convolution filters, and curve fits, the latter has proven to give the most accurate estimate. The function which is fitted to the data is a custom lookup table created from pulses recorded specifically for its creation. By recording pulses at different delays relative to the sampling grid, a look-up table with a much higher sample rate can be produced to avoid aliasing effects. In the case of this calibration setup, this is an interleaved sample rate of 1/3 ns compared to the raw sample rate of the ADC at 13.3 ns.

From the estimated energy of the two pulses that make up a pulse pair, the predetermined pulse ratio can be determined. Plotting this ratio over the attenuation level results in the desired linearity curve of the photo-receiver (photo-diode and amplifier).

In case of an RF-voltage input, each of the four inputs is driven by an individual high-speed precision function generator 8a, 8b, which are configured as arbitrary waveform generator, as will be described further below. These devices are programmed to follow one out of four predefined 3:1 waveforms per recording frame. Because the lasers sources 3a-d are pre-biased to just below threshold, the optical signals, in particular their pulse energy ratios, are very close to the 3:1 electrical double pulse train. By designing the sequence in which each channel fires the waveforms, a pulse sequence after combining in the combiner 4 is created. One of the pulse sequences is introduced in the following Fig. 6.

Fig. 6 shows a pulse stream of a first, second and offset laser pulses applied in an embodiment of the method for calibrating a detector device under test according to an embodiment of the invention.

In Fig. 6, an example stream of pulses is depicted for the embodiments shown in Fig. 1 to 5 as described above. In this example, a first selection of the first set S1 and second set S2 of laser sources in accordance with a first permutation A is performed so that three first and one second laser pulses P1-P4 are emitted in the first and second time slot t1, t2, respectively, according to the predetermined pulse ratio 3:1 in a first frame f1. In a second frame f2, one first and three second laser pulses P1-P4 are emitted in the inverse order in the second and first time slot t2, t1, respectively, according to the predetermined pulse ratio 1:3.

In a third time frame f3, each of the plurality of laser pulses P1-P4 of the plurality of laser sources 3a-d are emitted in a third time slot t3 different from the first and second time slots t1, t2. In response to the detection of these combined laser pulses P1-P4 in the third time slot t3, the detector device 2 under test provides an offset electric signal 65 by reading the detector 21 over the first and second time slots t2 for providing an electrical and optical video offset level.

Thus, in this embodiment, the offset electric signal 65 is provided subsequent to an electric signal 6 of each of a selected first set S1 of n laser sources 3a-d and second set S2 of m laser pulses of the predetermined pulse ratio and a selected first set S1 of m laser sources 3a-d and second set S2 of n laser pulses the inverse predetermined pulse ratio.

This order of frames is repeated in frames f4 to f12 until all permutations A to D have been conducted for achieving a predetermined pulse ratio 3:1 and 1:3 of the four laser sources 3a-d. This means, permutation B is applied in frames f4 to f6, permutation C is applied in frames f7 to f9 and permutation B is applied in frames f10 to f12. Strictly speaking, in frames f3, f6, f9 and f12 providing the offset electric signal, all lasers emit in the third time slot t3, so that the first and second set S1, S2 are basically suspended. Besides these frames, all the permutations A to D have a mutually different selection of laser sources into the first set S1 and second set S2, as it has been described above with reference to Fig. 3.

Therefore, one repetition of the complete sequence consists of twelve recording windows. This sequence of twelve frames can be further divided into four blocks or permutations A-D of three frames each - two signal frames and one empty frame providing the offset signal. Within each block, three lasers are emitting laser pulses in a first frame at the beginning of the frame and one single laser at the end. The second frame reverses this order, thus firing the same single laser sources first and the other three laser sources at the end of the frame. In the third frame, all four lasers are fired after the recording window in the third time slot t3, thus leaving this frame completely empty of signal. For each of the four blocks or permutations A-D within the sequence, a different one of the four laser diodes is used for the single pulse. All other laser sources 3a-d make up the superimposed laser pulse P1-P4.

This sequence was developed specifically to avoid different sources of systematic error and to allow for sanity checks probing the reliability of the measurement. One error source to be avoided is any inequality of the number of times a laser source 3a-d, such as a diode, produces a laser pulse P1-P4. Thus, all laser sources 3a-d firing in an empty frame so that each laser fires exactly one time in every single frame.

Another source could have been a slow drift in the constant offset level on the Analog-to-digital converter, ADC, in the processing part 22 on top of which the laser pulses P1-P4 or combined laser pulses PC1, PC2 are measured. Recording empty frames periodically throughout the measurement allows for an estimation of the background level at the time when a pulse pair PC1, PC2 was recorded, thereby eliminating any influence of drifts.

Furthermore, swapping the order of the combined large and small pulses PC1, PC2 between the two signal frames allows deducing additional quantities from the measured data which act as a cross-check of the primary quantity of interest, as will be described further below.

In order for the individual pulses to sum up correctly, they must be sent precisely at the same time. The calibration device 1 of this embodiment ensures this by sending a trigger signal from the signal chain under test to all four channels or electrical paths 80a-d of the function generators 8a, 8b through cables of equal length. In a further embodiment, four function generators 8a, 8b are used. In some embodiments, the second controller 51 is configured as a waveform generator. Furthermore, the second controller 51 is synchronized to the function generators 8a, 8b because otherwise the time to switch between attenuation levels may drift into a recording window over time. Furthermore, all three function/-waveform generators 51, 8a, 8b run on a single clock (daisy chain 10 MHz PLL locked).

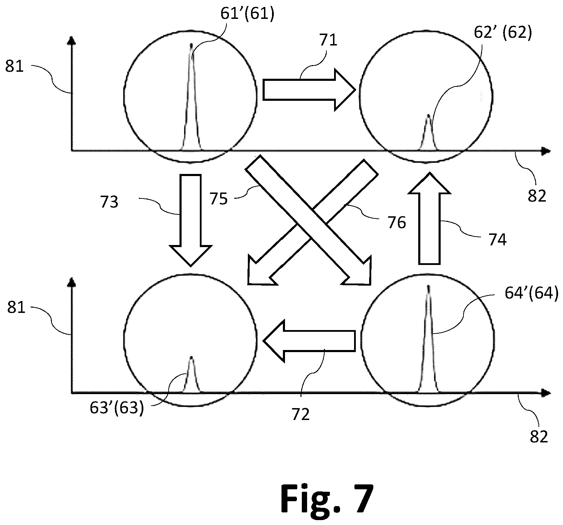

Fig. 7 shows a schematic illustration of sanity checks of the calibration device 1 is applied in an embodiment of the method for calibrating a detector device 2 under test according to an embodiment of the invention.

Fig. 7 describes the possible sanity checks for the calibration device 1 that can be performed to confirm a normal operation of the device.

As described above and not explicitly shown in Fig. 7 anymore, in a step h), steps a) to f) are repeated for a series of different pulse energies. Then, in a step i), a signal ratio of a first signal strength of the averaged first electric signal 61' and a second signal strength of the averaged second electric signal 62' is extrapolated to a pulse energy of 0 for comparison with the predetermined pulse ratio. By the deviation from the exact value of the predetermined ratio at a pulse energy of 0, the achievable precision can be reliably determined.

As indicated in Fig. 7, there are three more sanity checks available. The figure 7 shows the averaged first to fourth electric signals 61'-64' in a diagram with a signal strength on the vertical axis 81 as a function of the time on the horizontal axis 82 for both, the predetermined ratio n/m and the inverse of the predetermined ratio m/n. In a further embodiment, instead of the averaged first to fourth electric signals 61'-64', the first to fourth electric signals 61-64 are used for all the sanity checks described within this section. This is indicated in Fig. 7 by the respective numbers 61 to 64 in parentheses.

A ratio of a first signal ratio 71 with a second signal ratio 72 is determined to be 1 within a predefined tolerance indicative of a measurement accuracy. The first signal ratio 71 is defined by the ratio of the signal strengths of the averaged first electric signal 61' and the averaged second electric signal 62'. The second signal ratio 72 is defined by the ratio of the signal strengths of the averaged fourth electric signal 64' and the averaged third electric signal 63'. Deviation from 1 may be a measure of insufficient settling, i.e. memory effects in a photodiode or electronic circuitry, from the front pulse to the second pulse. Therefore, time separation between the first and second time slot may be adapted. A suitable time separation may be around 10 $\mu$s to 1 ms, e.g. 300 $\mu$s.

A ratio of a third signal ratio 73 with a fourth signal ratio 74 is determined to be 1 within a predefined tolerance indicative of a measurement accuracy. The third signal ratio 73 is defined by the ratio of the signal strengths of the averaged first electric signal 61' and the averaged third electric signal 63'. The fourth signal ratio 74 is defined by the ratio of the signal strengths of the averaged fourth electric signal 64' and the averaged second electric signal 62'. Deviation from 1 here may be a measure for insufficient settling or other memory effects between recorded frames. A suitable time separation may have to be addressed, such as e.g. between 1.25 ms to 50 ms, preferably depending on the adjustable frame rate. Furthermore, an onset of frame-to-frame cross-talk can be assessed by increasing the frame rate to a frequency, where the split between the third signal ratio and the fourth signal ratio starts to deviate.

A fifth signal ratio 75 and a sixth signal ratio 76 are determined to be 1 within a predefined tolerance indicative of a measurement accuracy. The fifth signal ratio 75 is defined by the ratio of the signal strengths of the averaged first electric signal 61' and the averaged fourth electric signal 64'. The sixth signal ratio 76 is defined by the ratio of the signal strengths of the averaged second electric signal 62' and the averaged third electric signal 63'. A deviation of the determined ratio of the fifth signal ratio and the sixth signal ratio from 1 is a measure for remaining systematic errors. As apparent in Fig. 7, the fifth and sixth ratio 75, 76 ideally must be equal to 1 because if all pulses 61'-64' are produced truly independently of each other, each pulse 61'-64' must have the same energy, indifferent to its position within the recording window. Thus, a deviation from the ideal value indicates the accuracy of the measurement.

As described about, for the above determinations, the non-averaged first to fourth electric signals 61-64 may be used instead of the averaged first to fourth electric signals 61'-64', thereby increasing speed at the cost of accuracy.

In preferred embodiments, the calibration device 1 is configured to calibrate the detector device 2 under test for linearity without any recalibration of any component of the calibration device 1. This is a consequence of the fact that the calibration device 1 is able to check its precision internally, as described above.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise. This disclosure hereby incorporates by reference the complete disclosure of any patent or application from which it claims benefit or priority.

LIST OF REFERENCE SIGNS

| 1 | calibration device |
|---|---|
| 2 | detector device |
| 3a-d | laser sources |
| 4 | combiner |
| 5 | controller |
| 6 | electric signals |
| 7 | tunable attenuator |
| 8a, 8b | function generator |
| 9 | background light source |
| 10 | second combiner |
| 21 | detector |
| 22 | processing part |
| 23 | data storage |
| 30a-d | optical path |
| 31a-d | optical fibers |
| 51 | second controller |
| 61-64 | first to fourth electric signals |
| 61'-64' | averaged first to fourth electric signals |
| 71 | first signal ratio |
| 72 | second signal ratio |
| 73 | third signal ratio |
| 74 | fourth signal ratio |
| 75 | fifth signal ratio |
| 76 | sixth signal ratio |
| 80a-d | electric path |
| 81 | vertical axis |
| 82 | horizontal axis |
| E1-E4 | pulse energies of the first to fourth laser pulses |
| P1-P4 | first to fourth laser pulses |
| PC1, PC2 | combined first and second laser pulses |

a) to i)    method steps

**Claims**

1.  Method for calibrating a detector device (2) under test, comprising

    a) emitting a number of n first laser pulses (P2-P4) by a first set (S1) of corresponding n laser sources (3a-d) of a plurality of laser sources (3a-d) in a first time slot (t1) and a number of m second laser pulses (P1) by a second set (S2) of m laser sources (3a-d) of the plurality of laser sources (3a-d) in a second time slot (t2) different from the first time slot (t1), wherein n ≥ 1, m ≥ 1, and n + m ≥ 3, wherein a ratio of n and m is defined as a predetermined pulse ratio n/m, wherein the first laser pulses (P2-P4) and the second laser pulses (P1) have a predetermined pulse energy;
    b) combining the first set (S1) of n laser pulses and the second set (S2) of m laser pulses to obtain a first combined laser pulse (PC1) in the first time slot (t1) and a second combined laser pulse (PC2) in the second time slot (t2);
    c) directing the first and second combined laser pulses (PC1, PC2) onto a detector (21) of the detector device (2) under test;
    d) detecting the first combined laser pulse (PC1) in the first time slot (t1) and the second combined laser pulse (PC2) in the second time slot (t2) by the detector device (2) to provide corresponding first and second electric signals (61, 62);
    e) repeating steps a) to d) by regrouping the plurality of laser sources (3a-d) into a different first set (S1) of n laser sources (3a-d) and a different second set (S2) of m laser sources (3a-d) through all permutations (A-D) of the plurality of laser sources (3a-d) by keeping the predetermined pulse ratio n/m; and
    f) averaging each of the detected first and second electric signals (62) of all permutations (A-D) to obtain an averaged first electric signal (61') and an averaged second electric signal (62') indicative of the response of the detector device (2) for the predetermined pulse ratio n/m.

2.  Method according to claim 1, further comprising:

    g) repeating steps a) to d) by regrouping the plurality of laser sources (3a-d) into a first set (S1) of m laser sources (3a-d) emitting m first laser pulses (P2-P4) and a second set (S2) of n laser sources (3a-d) emitting n second laser sources through all permutations (A-D) of the plurality of laser sources (3a-d) by keeping an inverse of the predetermined pulse ratio m/n, wherein detecting the first combined laser pulse (PC1) in the first time slot (t1) and the second combined laser pulse (PC2) in the second time slot (t2) by the detector device (2) provides corresponding third and fourth electric signals (63, 64),
    wherein averaging includes averaging each of the detected third and fourth electric signals (63, 64) to obtain an averaged third electric signal (63') and an averaged fourth electric signal (64') of the response of the detector device (2) for the predetermined pulse ratio m/n.

3.  Method according to claim 2, wherein by repeating the steps a) to d), for each selected first set (S1) of laser sources (3a-d) and second set (S2) of laser sources (3a-d), emitting the m first and n second laser pulses (P1) of the inverse of the predetermined pulse ratio m/n subsequently to the emitting of the corresponding n first and m second laser pulses (P1) of the predetermined pulse ratio.

4.  Method according to any of the preceding claims, further comprising, directing the first and second combined laser pulses (PC1, PC2) through a tunable attenuator (7) before incident onto the detector (21) for attenuating the first and second laser pulses (P1) by a predetermined attenuation value, preferentially repeating steps a) to f) or a) to g) within a predetermined time period, which is in particular less than 1 min, for rejecting 1/f-noise from the device under test.

5.  Method according to any of the preceding claims, further comprising emitting each of the plurality of laser pulses of the plurality of laser sources (3a-d) in a third time slot different from the first and second time slot (t2), wherein the detector device (2) provides an offset electric signal (65) by reading the detector (21) over the first and second time slots (t2) for providing an electrical and optical video offset level.

6.  Method according to claim 3 and 5, wherein the offset electric signal (65) is provided subsequent to an electric signal (6) of each of a selected first set (S1) of n laser sources (3a-d) and second set (S2) of m laser pulses of the predetermined pulse ratio and a selected first set (S1) of m laser sources (3a-d) and second set (S2) of n laser pulses the inverse predetermined pulse ratio.

7. Method according to any of the preceding claims, further comprising

> h) repeating steps a) to f) for a series of different pulse energies,
> i) extrapolating a signal ratio of a first signal strength of the averaged first electric signal (61') and a second signal strength of the averaged second electric signal (62') indicative to a pulse energy of 0 for comparison with the predetermined pulse ratio.

8. Method according to any of claims 2 or 3, further comprising determining a ratio of a first signal ratio (71) with a second signal ratio (72) to be 1 within a predefined tolerance indicative of a measurement accuracy;

> wherein the first signal ratio (71) is defined by the ratio of the signal strengths of the averaged first electric signal (61') and the averaged second electric signal (62'),
> wherein the second signal ratio (72) is defined by the ratio of the signal strengths of the averaged fourth electric signal (64') and the averaged third electric signal (63').

9. Method according to any of claims 2 or 3, further comprising determining a ratio of a third signal ratio (73) with a fourth signal ratio (74) to be 1 within a predefined tolerance indicative of a measurement accuracy;

> wherein the third signal ratio (73) is defined by the ratio of the signal strengths of the averaged first electric signal (61') and the averaged third electric signal (63'),
> wherein the fourth signal ratio (74) is defined by the ratio of the signal strengths of the averaged fourth electric signal (64') and the averaged second electric signal (62').

10. Method according to any of claims 2 or 3, further comprising determining a fifth signal ratio (75) and a sixth signal ratio (76) to be 1 within a predefined tolerance indicative of a measurement accuracy;

> wherein the fifth signal ratio (75) is defined by the ratio of the signal strengths of the averaged first electric signal (61') and the averaged fourth electric signal (64'),
> wherein the sixth signal ratio (76) is defined by the ratio of the signal strengths of the averaged second electric signal (62') and the averaged third electric signal (63').

11. Calibration device (1) for calibrating a detector device (2) under test, comprising a plurality of laser sources (3a-d) configured to emit a laser pulse in a predetermined time slot;

> a combiner (4) arranged downstream the laser sources (3a-d) and upstream the detector device (2) under test and configured to combine the laser pulses to form a combined laser pulse (PC1, PC2) for illuminating a detector (21) of the detector device (2); and
> a controller (5) configured to control a first set (S1) of n laser sources (3a-d) of the plurality of laser sources (3a-d) to emit respective n first laser pulses (P2-P4) in a first time slot (t1) and a second set (S2) of m laser sources (3a-d) of the plurality of laser sources (3a-d) to emit respective m second laser pulses (P1) in a second time slot (t2) different from the first time slot (t1), wherein $n \geq 1$, $m \geq 1$, and $n + m \geq 3$, wherein a ratio of n and m is defined as a predetermined pulse ratio n/m;
> wherein the controller (5) is configured to permute the first set (S1) of n laser sources (3a-d) and second set (S2) of m laser sources (3a-d) by keeping the predetermined pulse ratio n/m and permute a first set (S1) of m laser sources (3a-d) and a second set (S2) of n laser sources (3a-d) by keeping an inverse of the predetermined pulse ratio m/n, and
> wherein the controller (5) is further configured to receive electric signals (6) from the detector device (2) and average first and second electric signals (61, 62) received in response to emitted first and second combined laser pulses (PC1, PC2) to obtain an averaged first electric signal (61') and an averaged second electric signal (62').

12. Calibration device (1) according to claim 11, further comprising an tunable attenuator (7) disposed between the combiner (4) and the detector device (2) under test, and a second controller (51) configured to set the tunable attenuator (7) on a selected attenuation value, wherein the second controller (51) preferably is synchronized in time with the controller (5) and configured to change the selected attenuation value within a fraction of a repetition rate of the emitted laser pulses,

> wherein the controller (5) preferably is configured to receive electric signals (6) from the detector device (2) under test in response to detected laser pulses of different pulse energies, wherein the second controller (51) preferably is configured to change the selected attenuation value after a predetermined time period, which depends on the selected attenuation value.

13. Calibration device (1) according to any of claims 11 or 12, wherein an emission frequency band of the laser sources (3a-d) is different in pairs by at least a predetermined frequency, wherein a difference of the emission frequency band of each laser source (3a-d) in particular is at least 1 MHz, preferably between 1 MHz and 100 GHz.

14. Calibration device (1) according to any of claims 11 to 13, wherein the device further comprises a function generator (8a, 8b) configured to generate a pulsed electric signal, wherein the device is configured to feed the laser sources (3a-d) by the generated pulsed electric signal, wherein an electric path (80a-d) between the function generator (8a, 8b) and each of the laser sources (3a-d) preferably is the same within a predetermined electric path tolerance.

15. Calibration device (1) according to any of claims 11 to 14, further comprising a background light source (9) emitting a background light beam and a second combiner (10) configured to combine the backgroundlight beam with the combined laser pulse (PC1, PC2) for illuminating the detector (21) of the detector device (2) under test, and/or, wherein the calibration device (1) is configured to calibrate the detector device (2) under test for linearity without any recalibration of any component of the calibration device (1).

# Fig. 1

**Fig. 2**

**Fig. 3**

**Fig. 4**

**Fig. 5**

| A | | | B | | | C | | | D | | |
|---|---|---|---|---|---|---|---|---|---|---|---|
| 3:1 | 1:3 | — | 3:1 | 1:3 | — | 3:1 | 1:3 | — | 3:1 | 1:3 | — |
| f1 | f2 | f3 | f4 | f5 | f6 | f7 | f8 | f9 | f10 | f11 | f12 |

**Fig. 6**

**Fig. 7**

Europäisches
Patentamt
European
Patent Office
Office européen
des brevets

## EUROPEAN SEARCH REPORT

**Application Number**

EP 24 21 8683

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 108 995 A2 (AGILENT TECHNOLOGIES INC [US]) 20 June 2001 (2001-06-20)<br>* paragraph [0042] - paragraph [0074] *<br>* figures 1-10 * | 1-15 | INV.<br>G01J1/02<br>G01J1/08<br>G01J1/32<br>G01J1/04 |
| A | LV LIANG ET AL: "Illuminance scale development from 1 klx to 200 klx", METROLOGIA, INSTITUTE OF PHYSICS PUBLISHING, BRISTOL, GB, vol. 60, no. 5, 13 September 2023 (2023-09-13), XP020478200, ISSN: 0026-1394, DOI: 10.1088/1681-7575/ACF5F2 [retrieved on 2023-09-13]<br>* the whole document * | 1-15 | |
| A | "Calibration of fibre-optic power meters", IEC 61315:2019, IEC, 3, RUE DE VAREMBÉ, PO BOX 131, CH-1211 GENEVA 20, SWITZERLAND , 29 March 2019 (2019-03-29), pages 1-87, XP082058102, Retrieved from the Internet: URL:https://api.iec.ch/harmonized/publications/download/309533 [retrieved on 2019-03-29]<br>* page 33 - page 35 *<br>* figure 9 * | 1-15 | TECHNICAL FIELDS SEARCHED (IPC)<br><br>G01J |

The present search report has been drawn up for all claims

| Place of search | Date of completion of the search | Examiner |
|---|---|---|
| Munich | 15 May 2025 | Haller, Mirjam |

## ANNEX TO THE EUROPEAN SEARCH REPORT
## ON EUROPEAN PATENT APPLICATION NO.

EP 24 21 8683

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | | Publication date | Patent family member(s) | | Publication date |
|---|---|---|---|---|---|
| EP 1108995 | A2 | 20-06-2001 | DE | 19960910 A1 | 28-06-2001 |
| | | | EP | 1108995 A2 | 20-06-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **THEOCHAROUS et al.** Absolute linearity measurements on HgCdTe detectors in the infrared region. *Appl. Optics*, 20 July 2004, vol. 43 (21), 4182-4188